# EUROPÄISCHE PATENTSCHRIFT

(11) **EP 1 085 995 B1**
(45) Veröffentlichungstag und Bekanntmachung des Hinweises auf die Patenterteilung: **17.04.2002**
(21) Anmeldenummer: 98965615.2
(22) Anmeldetag: 16.12.1998
(51) Int. Cl.: B60K 15/077, F02M 37/02

(54) **VORRICHTUNG ZUM FÖRDERN VON KRAFTSTOFF AUS EINEM VORRATSBEHÄLTER ZUR BRENNKRAFTMASCHINE EINES KRAFTFAHRZEUGS**
DEVICE FOR CONVEYING FUEL FROM A TANK TO THE INTERNAL COMBUSTION ENGINE OF A MOTOR VEHICLE
DISPOSITIF PERMETTANT DE TRANSPORTER LE CARBURANT D'UN RESERVOIR JUSQU'AU MOTEUR A COMBUSTION INTERNE D'UN VEHICULE AUTOMOBILE

(30) Priorität: 18.06.1998 DE 19827060
(43) Veröffentlichungstag der Anmeldung: 28.03.2001
(73) Patentinhaber: ROBERT BOSCH GMBH, 70442 Stuttgart (DE)
(72) Erfinder: MIHATSCH, Steffen, D-71636 Ludwigsburg (DE); STROHL, Willi, D-71717 Beilstein (DE); EILER, Erich, D-74372 Sersheim (DE)
(86) Internationale Anmeldenummer: DE9803700
(87) Internationale Veröffentlichungsnummer: WO9965720

(56) Entgegenhaltungen:
- EP-A- 0 717 197
- EP-A- 0 819 843
- GB-A- 2 207 952

## Beschreibung

### Stand der Technik

Die Erfindung betrifft eine Vorrichtung zum Fördern von Kraftstoff aus einem Vorratsbehälter zur Brennkraftmaschine eines Kraftfahrzeugs nach dem Oberbegriff des Anspruchs 1, wie sie aus dem DE-GM 91 01 313 bekannt ist. Die bekannte Vorrichtung hat einen von einer Druckfeder belasteten düsenförmigen Körper, der ab einem bestimmten Druck in der Rücklaufleitung von der Brennkraftmaschine einen zusätzlichen Strömungsquerschnitt freigibt, um die Förderleistung der Strahlpumpe zu verringern. Dadurch, daß der düsenförmige Körper infolge seiner Öffnung in beide Richtungen stets durchströmt werden kann ist ein Rückströmen von Kraftstoff in die Rücklaufleitung möglich.

Weiterhin ist es aus der US 4,503,885 bekannt, in der Rücklaufleitung eine als Rückschlagventil wirkende Kugel zu verwenden, die von Federkraft beaufschlagt ist. Dadurch, daß die Kugel in einem zusätzlichen Raum angeordnet ist, baut die bekannte Strahlpumpe relativ groß.

### Vorteile der Erfindung

Die erfindungsgemäße Vorrichtung zum Fördern von Kraftstoff aus einem Vorratsbehälter zur Brennkraftmaschine eines Kraftfahrzeugs mit den Merkmalen des Anspruchs 1 hat demgegenüber den Vorteil, daß sie bei kompakter Bauweise ein Rückströmen von Kraftstoff in die Rücklaufleitung verhindert und gleichzeitig den Druck in der Rücklaufleitung regelt. Dadurch wird bewirkt, daß die Strahlpumpe bei sehr kleinen Rücklaufmengen mit der Förderung von Kraftstoff beginnt. Gleichzeitig bewirkt der von der Rücklaufmenge in der Rücklaufleitung abhängige Durchflußquerschnitt am Schließglied eine rücklaufmengenabhängige Fördermenge der Strahlpumpe.

Weitere Vorteile und vorteilhafte Weiterbildungen der erfindungsgemäßen Vorrichtung zum Fördern von Kraftstoff aus einem Vorratsbehälter zur Brennkraftmaschine eines Kraftfahrzeugs ergeben sich aus den Unteransprüchen und der Beschreibung.

Besonders vorteilhaft ist es, wenn die das Schließglied belastende Feder derart ausgelegt ist, daß das Schließglied erst von seinem Dichtsitz abhebt, wenn der Systemdruck für die Brennkraftmaschine erreicht ist. Dadurch läßt sich der normalerweise im System der Brennkraftmaschine erforderliche Druckregler einsparen.

### Zeichnung

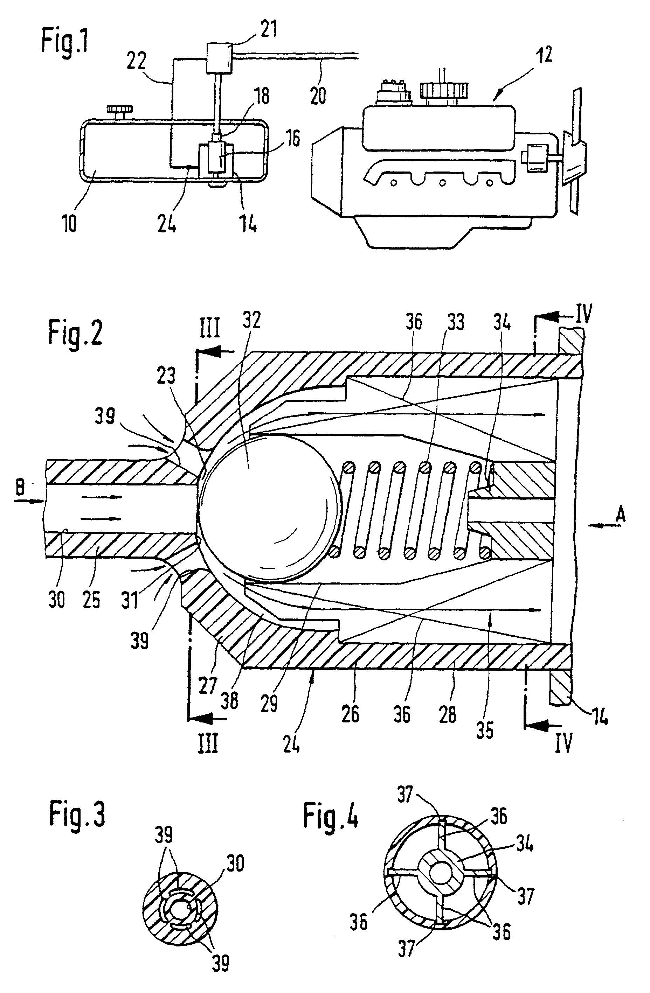

Ein Ausführungsbeispiel der Erfindung ist in der Zeichnung dargestellt und wird nachfolgend näher erläutert. Es zeigen Figur 1 eine Vorrichtung zum Fördern von Kraftstoff aus einem Vorratsbehälter zur Brennkraftmaschine eines Kraftfahrzeugs in vereinfachter Darstellung, Figur 2 eine Strahlpumpe der Vorrichtung nach Figur 1 in einem Längsschnitt und die Figuren 3 und 4 Schnitte entlang der Linien III-III und IV-IV der Figur 2.

### Beschreibung des Ausführungsbeispiels

In der Figur 1 ist vereinfacht eine Vorrichtung dargestellt, die zum Fördern von Kraftstoff aus einem Vorratsbehälter 10 zur Brennkraftmaschine 12 eines Kraftfahrzeugs dient. Im Vorratsbehälter 10 ist ein Staubehälter 14 angeordnet, aus dem ein Kraftstofförderaggregat 16 ansaugt, das im Staubehälter 14 angeordnet ist. An einem Druckstutzen 18 des Kraftstofförderaggregats 16 ist eine Druckleitung 20 angeschlossen, die zur Brennkraftmaschine 12 führt. In der Druckleitung 20 ist weiterhin ein Druckregler 21 zwischengeschaltet, der den Druck des geförderten Kraftstoffs in der Druckleitung 20 auf den für die Brennkraftmaschine 12 abgestimmten Systemdruck regelt. Vom Druckregler 21 führt eine Rücklaufleitung 22 zum Vorratsbehälter 10 zurück, durch die von der Brennkraftmaschine 12 nicht benötigter Kraftstoff wieder in den Vorratsbehälter 10 zurückströmt.

Mit der Rücklaufleitung 22 ist eine innerhalb des Vorratsbehälters 10 angeordnete Strahlpumpe 24 verbunden, durch die Kraftstoff in den Staubehälter 14 gefördert wird. Während des Betriebs der Brennkraftmaschine 12 fördert das Kraftstofförderaggregat 16 Kraftstoff aus dem Staubehälter 14 zur Brennkraftmaschine 12, und der durch die Rücklaufleitung 22 zurückströmende Kraftstoff treibt die Strahlpumpe 24 an.

Die in der Figur 2 näher dargestellte Strahlpumpe 24, die in eine in der Wand des Staubehälters 14 ausgebildete Öffnung eingreift, weist einen mit der Rücklaufleitung 22 verbundenen Zuströmstutzen 25 auf. Der Zuströmstutzen 25 ist Teil eines bevorzugt aus Kunststoff oder Metall bestehenden Gehäuses 26 der Strahlpumpe 24. Das hohlzylindrisch ausgebildete Gehäuse 26 erweitert sich vom Zuströmstutzen 25 über einen kegelförmig ausgebildeten Abschnitt 27 hin zu einem gegenüber dem Zuströmstutzen 25 im Durchmesser erweiterten Bereich 28. Die Innenfläche des Innenraums 29 des Gehäuses 26 ist im Bereich des Abschnitts 27 derart ausgebildet, daß sich der Querschnitt in Strömungsrichtung erweitert und daß im Übergangsbereich vom zylindrischen Zuströmkanal 30 zum Abschnitt 27 eine Sitzkante 31 ausgebildet ist, die zusammen mit einer als Schließglied wirkenden Kugel 32 einen Dichtsitz ausbildet. Wenn die Kugel 32 von der Sitzkante 31 abhebt, ist zwischen der Sitzkante 31 und der Kugel 32 ein ringförmiger Spalt 23 ausgebildet, der als Querschnittsverengung für den durch den Zuströmkanal 30 strömenden Kraftstoff wirkt.

Die Kugel 32 ist von der Federkraft einer Feder 33 in Richtung der Sitzkante 31 belastet. Die Feder 33 stützt sich auf der der Kugel 32 abgewandten Seite auf dem Stumpf 34 eines Führungskörpers 35 ab,

Der Führungskörper 35 hat vier, um jeweils 90° zueinander versetzt angeordnete Führungsrippen 36, die zur Befestigung des Führungskörpers 35 im Gehäuse 26 formschlüssig in entsprechende Aussparungen 37 eingreifen, die in der Wandfläche des Bereichs 28 ausgebildet sind. Die Führungsrippen 36 stellen sicher, daß die Kugel 32, wenn sie von der Sitzkante 31 abhebt, axial geführt ist. Insbesondere im Abschnitt 27 sind zwischen den Führungsrippen 36 und der Wand des Abschnitts 27 Spalte 38 ausgebildet.

Im Abschnitt 27 sind weiterhin vier auf einem gemeinsamen Teilkreis angeordnete, schlitzförmige Eintrittsöffnungen 39 ausgebildet, die den Vorratsbehälter 10 und den Innenraum 29 der Strahlpumpe 24 miteinander verbinden. Die Eintrittsöffnungen 39 münden im Innenraum 29 in unmittelbarer Nähe der Sitzkante 31 bzw. der Kugel 32, wenn diese auf der Sitzkante 31 aufsitzt. In dieser Position der Kugel 32 sind die Eintrittsöffnungen 39 in etwa auf den Mittelpunkt der Kugel 32 ausgerichtet.

Beim Betrieb der Brennkraftmaschine 12 gelangt überschüssiger Kraftstoff vom Druckregler 21 in die Rücklaufleitung 22, und von dort in den Zuströmstutzen 25. Sobald der Druck einen durch die Feder 33 vorgegebenen Druck überschritten hat, hebt die Kugel 32 von der Sitzkante 31 ab. Dadurch strömt der Kraftstoff unter Erhöhung seiner Strömungsgeschwindigkeit um die Kugel 32. Dabei wird auch der in den Eintrittsöffnungen 39 befindliche Kraftstoff mitgerissen und vermischt sich mit dem durch den Eintrittsstutzen 25 eingetretenen Kraftstoff. Dieser Mischvorgang findet im wesentlichen im Abschnitt 27 vor den Führungsrippen 36 sowie im Bereich der Spalte 38 statt. Der so vermischte Kraftstoff gelangt über den Bereich 28 des Gehäuses 26 in den Staubehälter 14, um den für den ordnungsgemäßen Betrieb des Kraftstofförderaggregats erforderlichen Mindestkraftstoffpegel sicherzustellen.

Weiterhin ist durch die oben beschriebene Ausbildung der Strahlpumpe 24 gewährleistet, daß ein relativ geringer Rücklaufvolumenstrom genügt, um zusätzlichen Kraftstoff durch die Eintrittsöffnungen 39 zu fördern.

Sobald nach Abstellen der Brennkraftmaschine 12 der in der Rücklaufleitung 22 herrschende Druck des Kraftstoffs so weit absinkt, daß die Feder 33 die Kugel 32 gegen die Sitzkante 31 drückt, wird zuverlässig verhindert, daß Kraftstoff aus dem Vorratsbehälter 10 bzw. dem Staubehälter 14 in die Rücklaufleitung 22 zurückströmt.

In einer Abwandlung des oben beschriebenen Ausführungsbeispiels ist es auch denkbar auf den Druckregler 21 zu verzichten. In diesem Fall ist anstelle des Druckreglers 21 lediglich ein T-förmiges Verteilerstück in der Druckleitung 20 vorgesehen, das den von dem Kraftstofförderaggregat 16 geförderten Kraftstoff einerseits zur Brennkraftmaschine 12, und andererseits zur Strahlpumpe 24 zurückfördert. Wesentlich dabei ist, daß die Feder 33 nunmehr derart ausgelegt ist, daß sie den Druck in der Druckleitung 20 auf das für die Brennkraftmaschine 12 erforderliche Niveau regelt. Das bedeutet auch, daß die Kugel 32 erst von der Sitzkante 31 abhebt, wenn der Systemdruck überschritten ist.

## Patentansprüche

1. Vorrichtung zum Fördern von Kraftstoff aus einem Vorratsbehälter (10) zur Brennkraftmaschine (12) eines Kraftfahrzeugs, mit einem im Vorratsbehälter (10) angeordneten Staubehälter (14), einem aus dem Staubehälter (14) ansaugenden und druckseitig mit der Brennkraftmaschine (12) verbundenen Kraftstofförderaggregat (16), einer Rücklaufleitung (22) von der Brennkraftmaschine (12) zum Vorratsbehälter (10), einer mit der Rücklaufleitung (22) verbundenen, im Vorratsbehälter (10) angeordneten Strahlpumpe (24), durch die Kraftstoff in den Staubehälter (14) gefördert wird, wobei die Strahlpumpe (24) eine Verengung (23) für den in der Rücklaufleitung (22) zurückströmenden Kraftstoff aufweist, um durch wenigstens eine am Gehäuse (26) der Strahlpumpe (24) ausgebildete Eintrittsöffnung (39) Kraftstoff aus dem Vorratsbehälter (10) in das Gehäuse (26) zu fördern, **dadurch gekennzeichnet, daß** die Verengung (23) zwischen einer Sitzkante (31) und einem von einer Feder (33) belasteten Schließelement (32) ausgebildet ist, so daß die Größe der Verengung (23) in Abhängigkeit von der Rücklaufmenge in der Rücklaufleitung (22) veränderlich ist und daß die wenigstens eine Eintrittsöffnung (39) in der Nähe der Verengung (23) ausgebildet ist.

2. Vorrichtung nach Anspruch 1, **dadurch gekennzeichnet, daß** die Feder (33) an den Systemdruck für die Brennkraftmaschine (12) angepasst ist, so daß Kraftstoff durch die Querschnittsverengung (23) strömt, wenn der Systemdruck überschritten ist.

3. Vorrichtung nach Anspruch 1, **dadurch gekennzeichnet, daß** zwischen dem Kraftstofförderaggregat (16) und der Brennkraftmaschine (12) ein Druckregler (21) geschaltet ist.

4. Vorrichtung nach einem der Ansprüche 1 bis 3, **dadurch gekennzeichnet, daß** das Schließglied als Kugel (32) ausgebildet ist und daß längs des Verschiebeweges der Kugel (32) rippenartige Führungen (36) für die Kugel (32) angeordnet sind.

5. Vorrichtung nach Anspruch 4, **dadurch gekennzeichnet, daß** die Führungen (36) zusammen mit einem Federhalter (34) als einstückiges Bauteil (35) ausgebildet sind.

6. Vorrichtung nach einem der Anssprüche 1 bis 5, **dadurch gekennzeichnet, daß** mehrere Eintrittsöffnungen (39) am Umfang eines Übergangsbereichs (27) des Gehäuses (26) der Strahlpumpe (24) ausgebildet sind.

## Claims

1. Device for delivering fuel from a storage tank (10) to the internal combustion engine (12) of a motor vehicle, having a retaining tank (14) arranged in the storage tank (10), a fuel-delivery unit (16) which sucks in fuel from the retaining tank (14) and is connected on the discharge side to the internal combustion engine (12), a return line (22) from the internal combustion engine (12) to the storage tank (10), a jet pump (24) which is connected to the return line (22), is arranged in the storage tank (10) and by means of which fuel is delivered into the retaining tank (14), the jet pump (24) having a constriction (23) for the fuel flowing back in the return line (22), in order to deliver, through at least one inlet opening (39) formed on the housing (26) of the jet pump (24), fuel into the housing (26) from the storage tank (10), **characterized in that** the constriction (23) is formed between a seat edge (31) and a closing element (32) stressed by a spring (33), with the result that the size of the constriction (23) can be varied as a function of the return quantity in the return line (22), and **in that** the at least one inlet opening (39) is formed in the vicinity of the constriction (23).

2. Device according to Claim 1, **characterized in that** the spring (33) is matched to the system pressure for the internal combustion engine (12), with the result that fuel flows through the cross-sectional constriction (23) if the system pressure is exceeded.

3. Device according to Claim 1, **characterized in that** a pressure regulator (21) is connected between the fuel-delivery unit (16) and the internal combustion engine (12).

4. Device according to one of Claims 1 to 3, **characterized in that** the closing member is formed as a ball (32), and **in that** rib-like guides (36) for the ball (32) are arranged along the path of displacement of the ball (32).

5. Device according to Claim 4, **characterized in that** the guides (36) are formed as an integral component (35) together with a spring holder (34).

6. Device according to one of Claims 1 to 5, **characterized in that** a plurality of inlet openings (39) are formed on the periphery of a transition region (27) of the housing (26) of the jet pump (24).

## Revendications

1. Dispositif d'alimentation en carburant d'un moteur à combustion interne (12) d'un véhicule automobile à partir d'un réservoir (10) comprenant un réservoir intermédiaire (14) placé dans le réservoir (10), une unité d'alimentation en carburant (16) qui aspire le carburant dans le réservoir intermédiaire (14) et dont le côté refoulement est relié au moteur à combustion interne (12), une conduite de retour (22) partant du moteur à combustion interne (12) et revenant au réservoir (10), d'une pompe à jet (24) reliée à la conduite de retour (22) et placée dans le réservoir (10) qui débite du carburant dans le réservoir intermédiaire (14), la pompe à jet (24) ayant un rétrécissement (23) pour le carburant repassant par la conduite de retour (22), pour débiter par au moins un orifice d'entrée (39) prévu dans le boîtier (26) de la pompe à jet (24), du carburant du réservoir (10) vers le boîtier (26),
**caractérisé en ce que**
le rétrécissement (23) est réalisé entre une arête formant siège (31) et un élément d'obturation (32) chargé par un ressort (33), de façon que la taille du rétrécissement (23) soit variable en fonction de la quantité de retour dans la conduite de retour (22), et
l'orifice d'entrée (39) au moins unique est prévu à proximité du rétrécissement (23).

2. Dispositif selon la revendication 1,
**caractérisé en ce que**
le ressort (33) est adapté à la pression du système d'alimentation du moteur à combustion interne (12) pour que le carburant passe par le rétrécissement en section (23) lorsqu'on dépasse la pression du système.

3. Dispositif selon la revendication 1,
**caractérisé par**
un régulateur de pression (21) monté entre l'unité d'alimentation en carburant (16) et le moteur à combustion interne (12).

4. Dispositif selon l'une quelconque des revendications 1 à 3,
**caractérisé en ce que**
l'organe d'obturation est réalisé en forme de bille (32) et des organes de guidage (36) en forme de nervures pour la bille (32) sont prévus le long du chemin de coulissement de la bille (32).

5. Dispositif selon la revendication 4,
**caractérisé en ce que**
les organes de guidage (36) sont réalisés en une seule pièce (35) avec un support de ressort (34).

6. Dispositif selon l'une quelconque des revendications 1 à 5,
**caractérisé en ce que**
plusieurs orifices d'entrée (39) sont réalisés à la périphérie d'une zone transitoire (27) du boîtier (26) de la pompe à jet (24).
